Europäisches Patentamt

European Patent Office

Office européen des brevets

(11) Publication number: **0 065 855**
A1

# (12) EUROPEAN PATENT APPLICATION

(21) Application number: **82302451.8**

(22) Date of filing: **13.05.82**

(51) Int. Cl.³: **F 02 C 7/32**
**F 04 D 27/02**

(30) Priority: **26.05.81 GB 8115989**

(43) Date of publication of application:
**01.12.82 Bulletin 82/48**

(84) Designated Contracting States:
**DE FR IT**

(71) Applicant: **LUCAS INDUSTRIES public limited company**
**Great King Street**
**Birmingham, B19 2XF(GB)**

(72) Inventor: **Guy, Kenneth Theodore**
**36 Park Avenue**
**Ruislip Middlesex, HA4, 7UQ(US)**

(74) Representative: **Cuddon, George Desmond**
**MARKS & CLERK Alpha Tower A.T.V. Centre**
**Birmingham B1 1TT(GB)**

(54) Auxiliary power system for use with a gas turbine engine.

(57) The power system includes an electric generator (21) driven through a gearbox (20) from a high pressure shaft (17) of a gas turbine engine (10). A valve (23) is responsive to engine intake pressure (P1) to bleed air from an intermediate compressor stage (15), when a predetermined altitude is exceeded, and the bleed air can be supplied through a passage (25) to an air motor (26) drivingly coupled to the gearbox (20), so that driving of the generator (21) is assisted when the power of the engine (10) is reduced at high altitude.

EP 0 065 855 A1

AUXILIARY POWER SYSTEM FOR USE WITH A GAS TURBINE ENGINE.

Technical Field.

The invention relates to systems which are driven by a gas turbine engine and which provide auxiliary power, for example electric and hydraulic power.

Background Art

It is common practice to drive such auxiliary power systems by means of gearing which is coupled to the high-pressure shaft of a multi-spool gas turbine engine which is mounted on an aircraft. With increasing altitude the power of the engine decreases, and the power requirement of the auxiliary equipment becomes an increasing proportion of the total power available from the high pressure shaft. Fuel flow to a gas turbine engine is commonly regulated in accordance with the speed of the high pressure shaft. Fuel flow to a gas turbine engine is commonly regulated in accordance with the speed of the high pressure shaft, and the power demand of the auxiliary equipment is met by an increased fuel flow to the engine.

Additionally, at increasing altitudes the pressure ratios across the several stages of the engine compressor can increase to levels at which the compressor will stall or surge. It is known for example from U.S. Patents 3,219,309 and 3,366,315 to bleed air to atmosphere from an intermediate stage of a compressor, to prevent compressor stall. This air is referred to as "engine management" bleed air, since its purpose is to achieve efficient operation of the engine, as distinct from other air pressure tappings which are taken from the engine compressor for the purpose of, for example, pressurisation of fuel tanks or of a cabin. U.S. patent 3,366,315 points out that, though this engine management bleed air is lost to atmosphere, the gain in compressor performance more than compensates for the loss of work done in compressing air which is subsequently bled off.

The increasing proportion of total engine power which is required at higher altitudes by the auxiliary equipment as described above, tends to result in an increased disparity between the efficient operating speed of the high pressure compressor and the speeds of the other compressor stages, thereby increasing the amount of engine management bleed air required to prevent compressor stall or surge. The present invention resides in the use of engine management bleed air for providing an additional power input to the auxiliary power system which is driven by the same engine.

Disclosure of the Invention

According to the invention an auxiliary power system for use with a gas turbine engine comprises an auxiliary power generating device, means for drivingly connecting said device to a shaft of the engine, an air motor drivingly connected to said engine shaft, and means for supplying air to said motor from a compressor stage of the engine, the air supplied to said motor being engine management bleed air.

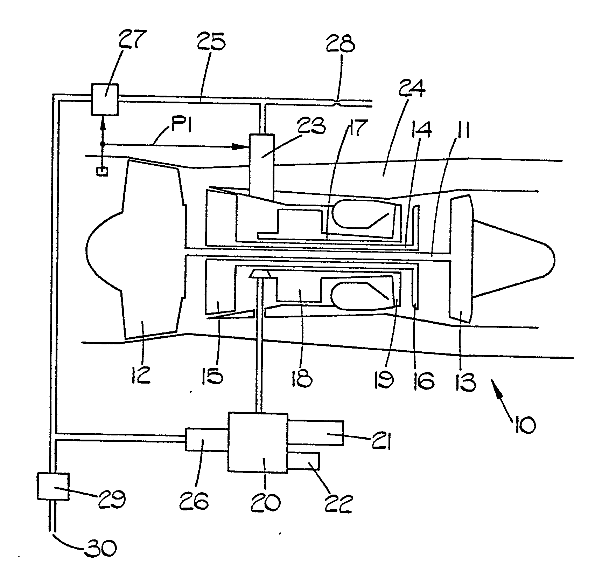

Brief Description of the Drawing

An embodiment of the invention will now be described by way of example only and with reference to the accompanying drawing which is a diagrammatic section through a multi-spool gas turbine engine and also shows an auxiliary power system which is driven by the engine.

Best Mode of Carrying out the Invention.

A gas turbine engine 10 includes an inner, low pressure shaft 11 which interconnects a low pressure compressor 12, and a low pressure turbine 13, an intermediate pressure shaft 14 interconnecting an intermediate pressure compressor 15 and an intermediate pressure turbine 16, and a high pressure shaft 17 interconnecting a high pressure compressor 18 and a high pressure turbine 19. A gearbox 20 is drivingly coupled to the high pressure shaft 17 and auxiliary power generating devices, for example an alternator 21 and a hydraulic pump 22, are driven by the gearbox 20.

A bleed valve 23, which is preferably servo-operated and may be of the general type disclosed in U.S. Patent 3,366,315, is responsive, inter alia, to the pressure P1 at the air intake of the engine 10, and bleeds air from the outlet of the intermediate compressor 15 in order to prevent the latter from delivering more air than can be accommodated by the high pressure compressor 18. The valve 23 remains open at an inlet pressure P1 which corresponds to an altitude of 10,500 metres and discharges a proportion of the air leaving the compressor 15. This proportion is dependent on the internal flow restriction of the bleed valve 23, and constitutes engine management bleed air for the intermediate stage compressor 15.

Engine management bleed air has in the past been discharged either directly to atmosphere or into a bypass duct 24 of the engine. In the present invention this bleed air is delivered to a passage 25 which communicates with a continuously-rated air motor 26 which is drivingly coupled to the gearbox 20.

At altitudes lower than 10,5000 metres the power available from the engine 10 is sufficient to accommodate the maximum power demand of the gearbox 20, generator 21 and pump 22, and driving assistance from the motor 26 will not normally be required. A valve 27 in the passage 25 is therefore shut at values of pressure P1 which corresponds to altitudes of less than 10,500 metres. Since the valve 23 may open at altitudes less than 10,500 metres, for example in response to a rapid deceleration of the high pressure shaft 17, the passage 25 communicates with atmosphere by way of a flow restriction 28, through which engine management bleed air may continue to escape.

Downstream of the valve 27 the passage 25 communicates by way of a further valve 29 with a connection 30 to which high pressure air may be applied to the motor 26 to start the engine 10. The valve 29 is opened only during engine starting, the valve 27 being, of course, shut at that time.

CLAIMS:

1. An auxiliary power system for use with a gas turbine engine (10), comprising an auxiliary power generating device (21 or 22), a driving connection (20) between said device (21 or 22) and a shaft (17) of the engine (10), an air motor (26) drivingly connected to said engine shaft (17), and a passage (25) for delivering bleed air from a compressor stage (15) of the engine (10) to said motor (26), characterised in that bleed air is controlled by a valve (23) which is responsive to operating conditions of the engine to prevent compressor stall.

2. An auxiliary power system as claimed in Claim 1 in which said compressor stage is an intermediate compressor stage.

3. An auxiliary power system as claimed in Claim 1 or Claim 2 in which said valve (23) is responsive to engine air intake pressure (P1) and is maintained open when said intake pressure (P1) corresponds to altitudes in excess of a predetermined value (10,500 metres).

0065855

**European Patent Office**

**EUROPEAN SEARCH REPORT**

Application number

EP 82 30 2451

## DOCUMENTS CONSIDERED TO BE RELEVANT

| Category | Citation of document with indication, where appropriate, of relevant passages | Relevant to claim | CLASSIFICATION OF THE APPLICATION (Int. Cl. ³) |
|---|---|---|---|
| X | US-A-3 514 945 (K.A. AUSTIN) <br> * Column 1, lines 24-26; column 4, lines 56-63 * | 1 | F 02 C 7/32 <br> F 04 D 27/02 |
| A | FR-A-2 015 495 (UNITED AIRCRAFT CORP.) <br> * Page 3, lines 14-19; page 4, lines 22-36; figure 4 * | 1 | |
| A | US-A-3 915 587 (RANNENBERG) <br> * Column 1, lines 63-68; column 3, lines 37-40, 50-52 * | 1 | |
| A | US-A-3 344 606 (ABERNETHY) | | |
| D,A | US-A-3 366 315 (ALBERNANI) | | TECHNICAL FIELDS SEARCHED (Int. Cl. ³) |
| D,A | US-A-3 219 309 (ALBERANI) | | F 04 D <br> F 02 C <br> B 64 D |

The present search report has been drawn up for all claims

| Place of search <br> THE HAGUE | Date of completion of the search <br> 16-08-1982 | Examiner <br> WOOD R.S. |
|---|---|---|

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO Form 1503. 03.82